# EUROPEAN PATENT APPLICATION

(11) **EP 3 424 697 A1**
(43) Date of publication of application: **09.01.2019**
(21) Application number: 17759570.9
(22) Date of filing: 07.02.2017
(51) Int. Cl.: B32B 3/24, B32B 15/08, B32B 15/20, C25D 11/04, C25D 11/18, C25D 11/22, C25D 11/24

(54) **COMPOSITE BODY**

(30) Priority: 29.02.2016 JP 2016037897; 16.01.2017 JP 2017005394
(71) Applicant: FUJI-FILM Corporation, Minato-ku Tokyo 106-8620 (JP)
(72) Inventor: KAWAGUCHI, Junji, Haibara-gun Shizuoka 421-0396 (JP); MATSUSHITA, Yasuaki, Haibara-gun Shizuoka 421-0396 (JP); ASAKURA, Takao, Haibara-gun Shizuoka 421-0396 (JP)
(74) Representative: Hoffmann Eitle
(86) International application number: PCT/JP2017/004406
(87) International publication number: WO 2017/150099

(57) **Abstract**

An object of the invention is to provide a composite body with which a molded article having both excellent external appearance and excellent light-transmitting properties can be produced. The composite body of the invention is a composite body having an aluminum base material having a plurality of through-holes in the thickness direction; and a resin layer provided on at least one surface of the aluminum base material, in which the average opening diameter of the through-holes is 0.1 to 100 µm, and the average opening ratio provided by the through-holes is 1% to 50%.

## Description

### BACKGROUND OF THE INVENTION

### 1. Field of the Invention

The present invention relates to a composite body of an aluminum base material and a resin layer.

### 2. Description of the Related Art

It has been conventionally known that the decorativeness of a resin molded article is enhanced by vapor-depositing metal on the surface of the resin molded article and thereby imparting a metallic tone or a half-mirror tone to the resin molded article.

For example, in JP2005-015867A, "a decorated plastic molded article which is a light-transmitting plastic molded article (1) having a vapor-deposited film (3) containing a metal as a main ingredient formed on the surface, in which the total light transmittance is in the range of 98% to 50% of the total light transmittance obtainable before the formation of the vapor-deposited film (3)" is described ([Claim 1]).

Furthermore, in JP2015-196280A, "a decorated resin molded article that is vapor-deposited, having a vapor-deposited film layer formed on the outer surface of a transparent resin base material; and a transparent top coat layer formed on the surface of the vapor-deposited film layer, in which the color tone viewed from the outer surface side and the color tone viewed from the inner surface side are close to each other" is described ([Claim 1]).

### SUMMARY OF THE INVENTION

The inventors of the invention conducted a study on the conventionally known decorated plastic molded articles described in JP2005-015867A, JP2015-196280A, and the like, and they found that it is difficult to obtain both the external appearance (for example, metallic luster) and light-transmitting properties.

Thus, it is an object of the invention to provide a composite body with which a molded article having both excellent external appearance and excellent light-transmitting properties can be produced.

The inventors conducted a thorough investigation in order to achieve the object described above, and as a result, the inventors found that in a case where a composite body including a resin layer and an aluminum base material having through-holes, the through-holes having an average opening diameter and an average opening ratio in particular ranges, is used, a molded article having both excellent external appearance and excellent light-transmitting properties can be produced. Thus, the inventors completed the invention.

That is, the inventors found that the object described above can be achieved by the following configurations.
[1] A composite body comprising:
   an aluminum base material having a plurality of through-holes in the thickness direction; and
   a resin layer provided on at least one surface of the aluminum base material,
   wherein the average opening diameter of the through-holes is 0.1 to 100 µm, and
   the average opening ratio provided by the through-holes is 1% to 50%.
[2] The composite body according to [1], wherein the average effective diameter of the through-holes in a cross section cut in a direction perpendicular to the surface of the aluminum base material is 700 nm or larger.
[3] The composite body according to [1] or [2], wherein the average thickness of the resin layer is 12 to 200 µm.
[4] The composite body according to any one of [1] to [3], wherein the average thickness of the aluminum base material is 5 to 1,000 µm.

As will be explained below, according to the invention, a composite body with which a molded article having both excellent external appearance and excellent light-transmitting properties can be produced can be provided.

### BRIEF DESCRIPTION OF THE DRAWINGS

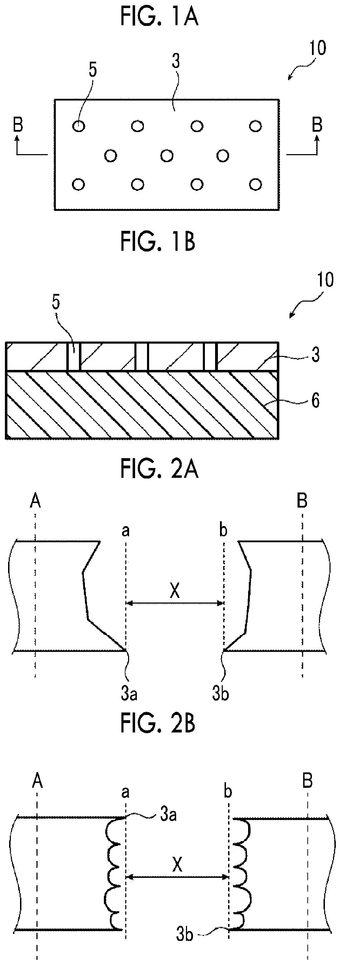

Fig. 1A is a schematic top view illustrating an example of the composite body of the invention.
Fig. 1B is a cross-sectional view cut along the line B-B of Fig. 1A.
Fig. 2A is a cross-sectional view of an aluminum base material for explaining the average effective diameter of the through-holes.
Fig. 2B is a cross-sectional view of another aluminum base material for explaining the average effective diameter of the through-holes.

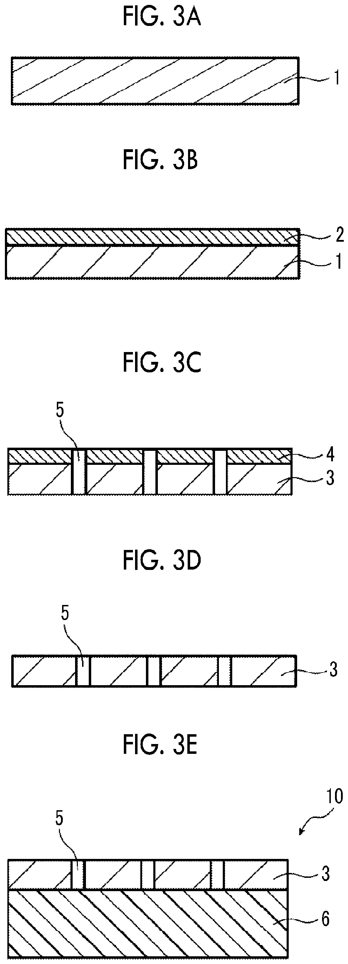

Fig. 3A is a schematic cross-sectional view of an aluminum base material among schematic cross-sectional views for explaining an example of a suitable production method for the composite body of the invention.
Fig. 3B is a schematic cross-sectional view illustrating the state in which an aluminum hydroxide coating film has been formed on the surface of the aluminum base material by subjecting the aluminum base material to a coating film forming treatment, among the schematic cross-sectional views for explaining the example of the suitable production method for the composite body of the invention.
Fig. 3C is a schematic cross-sectional view illustrating the state in which through-holes have been formed in the aluminum base material and the aluminum hydroxide coating film by subjecting the aluminum base material and the aluminum hydroxide coating film to an electrochemical dissolution treatment after the coating film forming treatment, among the schematic cross-sectional views for explaining the example of the suitable production method for the composite body of the invention.
Fig. 3D is a schematic cross-sectional view illustrating the state in which the aluminum hydroxide coating film has been removed after the electrochemical dissolution treatment, among the schematic cross-sectional views for explaining the example of the suitable production method for the composite body of the invention.
Fig. 3E is a schematic cross-sectional view illustrating the state in which a resin layer has been formed on one of the surfaces after the removal of the aluminum hydroxide coating film, among the schematic cross-sectional views for explaining the example of the suitable production method for the composite body of the invention.

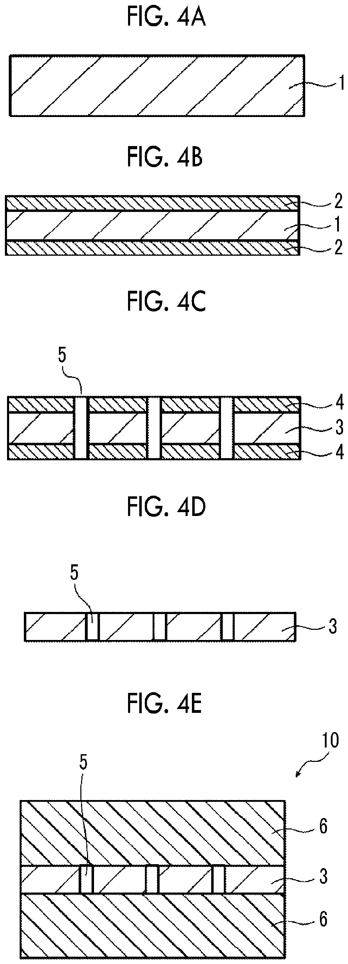

Fig. 4A is a schematic cross-sectional view of the aluminum base material among schematic cross-sectional views for explaining another example of a suitable production method for the composite body of the invention.
Fig. 4B is a schematic cross-sectional view illustrating the state in which an aluminum hydroxide coating film has been formed on the front surface and the back surface of the aluminum base material by subjecting the aluminum base material to a coating film forming treatment, among the schematic cross-sectional views for explaining the other example of the suitable production method for the composite body of the invention.
Fig. 4C is a schematic cross-sectional view illustrating the state in which through-holes have been formed in the aluminum base material and the aluminum hydroxide coating film by subjecting the aluminum base material and the aluminum hydroxide coating film to an electrochemical dissolution treatment after the coating film forming treatment, among the schematic cross-sectional views for explaining the other example of the suitable production method for the composite body of the invention.
Fig. 4D is a schematic cross-sectional view illustrating the state in which the aluminum hydroxide coating film has been removed after the electrochemical dissolution treatment, among the schematic cross-sectional views for explaining the other example of the suitable production method for the composite body of the invention.
Fig. 4E is a schematic cross-sectional view illustrating the state in which a resin layer has been formed on both surfaces after the removal of the aluminum hydroxide coating film, among the schematic cross-sectional views for explaining the other example of the suitable production method for the composite body of the invention.

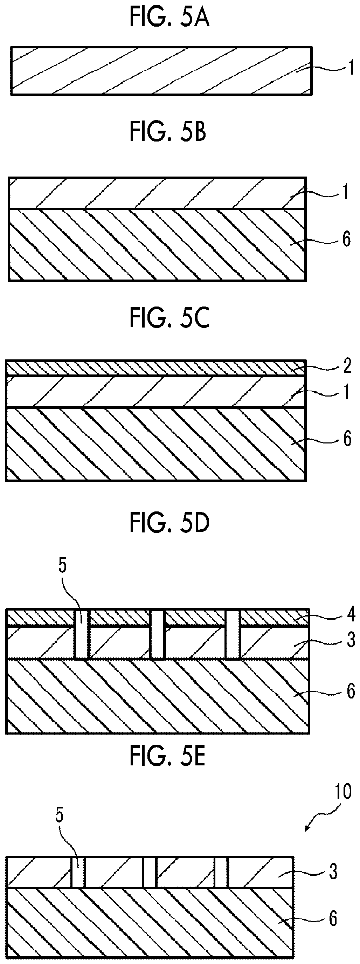

Fig. 5A is a schematic cross-sectional view of an aluminum base material among schematic cross-sectional views for explaining another example of a suitable production method for the composite body of the invention.
Fig. 5B is a schematic cross-sectional view illustrating the state in which a resin layer has been formed on one of the surfaces of the aluminum base material, among the schematic cross-sectional views for explaining the other example of the suitable production method for the composite body of the invention.
Fig. 5C is a schematic cross-sectional view illustrating the state in which an aluminum hydroxide coating film has been formed on the surface of the aluminum base material on the side where a resin layer is not formed, by subjecting the relevant surface of the aluminum base material to a coating film forming treatment, among the schematic cross-sectional views for explaining the other example of the suitable production method for the composite body of the invention.
Fig. 5D is a schematic cross-sectional view illustrating the state in which through-holes have been formed in the aluminum base material and the aluminum hydroxide coating film by subjecting the aluminum base material and the aluminum hydroxide coating film to an electrochemical dissolution treatment after the coating film forming treatment, among the schematic cross-sectional views for explaining the other example of the suitable production method for the composite body of the invention.
Fig. 5E is a schematic cross-sectional view illustrating the state in which the aluminum hydroxide coating film is removed after the electrochemical dissolution treatment, among the schematic cross-sectional views for explaining the other example of the suitable production method for the composite body of the invention.

### DESCRIPTION OF THE PREFERRED EMBODIMENTS

Hereinafter, the invention will be described in detail.

The explanation of the constituent elements described below may be based on representative embodiments of the invention; however, the invention is not intended to be limited to such embodiments.

In the present specification, a numerical value range indicated using the term "to" means a range including the numerical values described before and after the term "to" as the lower limit and the upper limit.

### [Composite body]

The composite body of the invention includes an aluminum base material having a plurality of through-holes in the thickness direction, and a resin layer provided on at least one surface of the aluminum base material.

The composite body of the invention is such that the average opening diameter of the through-holes is 0.1 to 100 µm.

Furthermore, the composite body of the invention is such that the average opening ratio provided by the through-holes is 1% to 50%.

Here, regarding the average opening diameter of the through-holes, from a scanning electron microscope (SEM) photograph obtained by capturing an image of the surface of the aluminum base material from right above at a magnification ratio of 100 to 10,000 times using a high resolution SEM, at least twenty through-holes each having its circumference arranged annularly are extracted, the diameters of the through-holes are read out as opening diameters, and the average value of these values is calculated as the average opening diameter.

Regarding the magnification ratio, a magnification ratio in the range described above can be selected as appropriate so as to obtain a SEM photograph from which twenty or more through-holes can be extracted. The opening diameter was obtained by measuring the maximum value of the distance between ends of a through-hole area. That is, since the shape of the opening of a through-hole is not limited to an approximately circular shape, in a case where the shape of the opening is a non-circular shape, the maximum value of the distance between ends of a through-hole area is designated as the opening diameter. Therefore, for example, even in the case of a through-hole having a shape that seems as if two or more through-holes have integrated, this is regarded as a single through-hole, and the maximum value of the distance between ends of the through-hole area is designated as the opening diameter.

Regarding the average opening ratio provided by the through-holes, a parallel light optical unit is installed on the side of one of the surfaces of the aluminum base material, parallel light is transmitted, an image of the surface of the aluminum base material is captured from the other surface of the aluminum base material at a magnification ratio of 100 times using an optical microscope, and a photograph is obtained. In a viewing field having a size of 100 mm × 75 mm (five sites) in a range of 10 cm × 10 cm of the photograph thus obtained, the ratio (opening area / geometrical area) is calculated from the sum of the opening areas of the through-holes projected by the transmitted parallel light and the area of the viewing field (geometrical area), and the average value of the various viewing fields (five sites) is calculated as the average opening ratio.

According to the invention, a molded article having both excellent external appearance and excellent light-transmitting properties can be produced by providing an aluminum base material in which the average opening diameter and the average opening ratio of through-holes are in the above-mentioned ranges; and a resin layer provided on at least one surface of the aluminum base material.

In this regard, although the details are not clearly understood, the inventors speculate the reason as follows.

That is, it is thought that since the average opening diameter and the average opening ratio of the through-holes existing in the aluminum base material are within the ranges described above, it becomes difficult to visually recognize the existence of the through-holes, and since visible light can permeate through the through-holes, the composite body can transmit light without impairing the external appearance such as metallic luster.

It is also thought that by having a resin layer, the composite body can be easily processed into a molded article such as a metal tone decorated body used for illumination applications.

Next, the overall configuration of the composite body of the invention will be explained using Fig. 1, and then various specific configurations will be explained.

Composite body 10 illustrated in Fig. 1A and Fig. 1B includes an aluminum base material 3 having a plurality of through-holes 5 in the thickness direction, and a resin layer 6 provided on one of the surfaces of the aluminum base material 3.

Here, in the composite body 10 illustrated in Fig. 1B, the hole wall surface of the through-holes 5 is perpendicular to the surface of the aluminum base material 3; however, according to the invention, the hole wall surface of the through-holes may have a concavo-convex shape as illustrated in Fig. 2A and Fig. 2B shown below.

Furthermore, in the composite body 10 illustrated in Fig. 1B, the resin layer 6 is provided on one of the surfaces of the aluminum base material 3; however, according to the invention, the resin layer may be provided on both surfaces of the aluminum base material 3 as illustrated in Fig. 4E shown below.

### [Aluminum base material]

The aluminum base material included in the composite body of the invention is not particularly limited as long as the aluminum base material has through-holes as described below, and for example, known aluminum alloys such as 3000 series (for example, 3003 material) and 8000 series (for example, 8021 material) can be used.

Regarding such aluminum alloys, for example, aluminum alloys of the alloy numbers indicated in the following Table 1 can be used.

**[Table 1]**

| | Si (% by mass) | Fe (% by mass) | Cu (% by mass) |
|---|---|---|---|
| Alloy No. | | | |
| 1085 | 0.02 | 0.04 | < 0.01 |
| 1N30 | 0.11 | 0.45 | 0.02 |
| 8021 | 0.04 | 1.44 | < 0.01 |
| 3003 | 0.60 | 0.70 | 0.10 |

### <Through-holes>

The through-holes carried by the aluminum base material are such that, as described above, the average opening diameter of the through-holes is 0.1 to 100 µm, and the average opening ratio provided by the through-holes is 1% to 50%.

Here, from the viewpoints of the adhesiveness to the resin layer that will be described below, tensile strength, visibility of the through-holes, and the like, the average opening diameter of the through-holes is preferably 1 to 100 µm, more preferably 1 to 70 µm, and even more preferably 1 to 40 µm.

Furthermore, from the viewpoints of the adhesiveness to the resin layer that will be described below, tensile strength, light-transmitting properties, and the like, the average opening ratio provided by the through-holes is preferably 2% to 45%, more preferably 2% to 30%, even more preferably 5% to 30%, and particularly preferably 10% to 30%.

According to the invention, for the reason that the light-transmitting properties are further improved, the average effective diameter of the through-holes in a cross section cut in a direction perpendicular to the surface of the aluminum base material is preferably 700 nm or more, more preferably 800 nm or more, and even more preferably 1 to 100 µm.

Here, the average effective diameter refers to the shortest distance between hole wall surfaces of a through-hole in a cross section cut in a direction perpendicular to the surface of the aluminum base material, and as illustrated in Fig. 2A and Fig. 2B, the average effective diameter refers to the average value of distances X, each distance being the distance between a perpendicular line a at a point 3a where the distance from the reference line A to the left-hand side hole wall surface of a through-hole is the largest, and a perpendicular line b at a point 3b where the distance from the reference line B to the right-hand side hole wall surface of the through-hole is the largest.

According to the invention, regarding the average effective diameter, a parallel light optical unit is installed on the side of one of the surfaces of the aluminum base material, parallel light is transmitted, an image of the surface of the aluminum base material is captured from the other surface of the aluminum base material at a magnification ratio of 100 times using an optical microscope, and thus a photograph is obtained. In a viewing field having a size of 100 mm × 75 mm (five sites) in a range of 10 cm × 10 cm of the photograph thus obtained, twenty through-holes that are projected by the transmitted parallel light are extracted from each viewing field. The diameters of one hundred through-holes in total thus extracted are measured, and the average value of these is calculated as the average effective diameter.

### <Thickness>

The average thickness of the aluminum base material is preferably 5 to 1,000 µm, and from the viewpoint of handleability, the average thickness is more preferably 5 to 50 µm, and even more preferably 8 to 30 µm.

Here, the average thickness of the aluminum base material refers to the average value of thicknesses measured at any five points using a contact type film thickness meter (digital electronic micrometer).

### [Resin layer]

The resin layer included in the composite body of the invention is not particularly limited as long as the resin layer is a layer formed from a resin material having transparency, and examples of the resin material include a polyester and a polyolefin.

Specific examples of the polyester include polyethylene terephthalate (PET) and polyethylene naphthalate.

Specific examples of other resin materials include a polyamide, a polyether, a polystyrene, a polyester amide, a polycarbonate, polyphenylene sulfide, a polyether ester, polyvinyl chloride, a polyacrylic acid ester, and a polymethacrylic acid ester.

Here, the phrase "having transparency" represents that the transmittance of visible light is 60% or higher, preferably 80% or higher, and particularly preferably 90% or higher.

### <Thickness>

From the viewpoints of handleability and workability, the average thickness of the resin layer is preferably 12 to 200 µm, more preferably 12 to 100 µm, even more preferably 25 to 100 µm, and particularly preferably 50 to 100 µm.

Here, the average thickness of the resin layer refers to the average value of thicknesses measured at any five points using a contact type film thickness meter (digital electronic micrometer).

### [Method for producing composite body]

The method for producing the composite body of the invention is not particularly limited; however, for example, a method including a coating film forming step of forming an aluminum hydroxide coating film on at least one surface of an aluminum base material; a through-hole forming step of performing a through-hole forming treatment after the coating film forming step and thereby forming through-holes; a coating film removing step of removing the aluminum hydroxide coating film after the through-hole forming step; and a resin layer forming step of forming a resin layer on at least one surface of the aluminum base material having through-holes after the coating film removing step (hereinafter, also simply referred to as "production method A"); and a method including a resin layer forming step of forming a resin layer on one of the surfaces of an aluminum base material; a coating film forming step of forming an aluminum hydroxide coating film on the surface of the aluminum base material on the side where a resin layer is not provided, after the resin layer forming step; a through-hole forming step of performing a through-hole forming treatment after the coating film forming step and thereby forming through-holes; and a coating film removing step of removing the aluminum hydroxide coating film after the through-hole forming step (hereinafter, also simply referred to as "production method B"). Among these methods, production method A is preferred.

Next, various steps of the method for producing a composite body will be explained using Fig. 3A to Fig. 3E, Fig. 4A to Fig. 4E, and Fig. 5A to Fig. 5E, and then the various steps will be described in detail.

Fig. 3A to Fig. 3E and Fig. 4A to Fig. 4E are schematic cross-sectional views illustrating examples of suitable embodiments of production method A for the composite body.

As illustrated in Fig. 3A to Fig. 3E and Fig. 4A to Fig. 4E, production method A for the composite body is a production method comprising a coating film forming step (Fig. 3A and Fig. 3B, and Fig. 4A and Fig. 4B) of subjecting one of the surfaces (both surfaces in the aspect illustrated in Fig. 4) of an aluminum base material 1 to a coating film forming treatment, and thereby forming an aluminum hydroxide coating film 2; a through-hole forming step (Fig. 3B and Fig. 3C, and Fig. 4B and Fig. 4C) of subjecting the aluminum base material to an electrolytic dissolution treatment after the coating film forming step so as to form through-holes 5, and producing a laminate having an aluminum base material 3 having through-holes and an aluminum hydroxide coating film 4 having through-holes; a coating film removing step (Fig. 3C and Fig. 3D, and Fig. 4C and Fig. 4D) of removing the aluminum hydroxide coating film 4 having through-holes after the through-hole forming step, and producing an aluminum base material 3 having through-holes; and a resin layer forming step (Fig. 3D and Fig. 3E, and Fig. 4D and Fig. 4E) of forming a resin layer 6 on one of the surfaces (both surfaces in the aspect illustrated in Fig. 4) of the aluminum base material 3 having through-holes after the coating film removing step, and producing a composite body.

Fig. 5A to Fig. 5E are schematic cross-sectional views illustrating an example of a suitable embodiment of production method B for the composite body.

As illustrated in Fig. 5A to Fig. 5E, production method B for the composite body is a production method comprising a resin layer forming step (Fig. 5A and Fig. 5B) of forming a resin layer 6 on one of the surfaces of an aluminum base material 1; a coating film forming step (Fig. 5B and Fig. 5C) of subjecting the surface of the aluminum base material 1 on the side where the resin layer 6 is not formed, to a coating film forming treatment, and forming an aluminum hydroxide coating film 2; a through-hole forming step (Fig. 5C and Fig. 5D) of subjecting the aluminum base material to an electrolytic dissolution treatment after the coating film forming step so as to form through-holes 5, and producing a laminate including an aluminum base material 3 having through-holes, an aluminum hydroxide coating film 4 having through-holes, and a resin layer 6 that does not have through-holes; and a coating film removing step (Fig. 5D and Fig. 5E) of removing the aluminum hydroxide coating film 4 having through-holes after the through-hole forming step, and producing a composite body including an aluminum base material 3 having through-holes and a resin layer 6 that does not have through-holes.

### [Coating film forming step]

The coating film forming step is a step of subjecting the surface of an aluminum base material to a coating film forming treatment and forming an aluminum hydroxide coating film.

### <Coating film forming treatment>

The coating film forming treatment is not particularly limited, and for example, a treatment such as any conventionally known treatment for forming an aluminum hydroxide coating film can be applied.

Regarding the coating film forming treatment, for example, the conditions or apparatuses described in paragraphs [0013] to [0026] of JP2011-201123A can be employed as appropriate.

According to the invention, since the conditions for the coating film forming treatment undergo various changes depending on the liquid electrolyte used, the conditions cannot be determined indiscriminately; however, in general, conditions include a liquid electrolyte concentration of 1% to 80% by mass, a liquid temperature of 5°C to 70°C, a current density of 0.5 to 60 A/dm², a voltage of 1 to 100 V, and an electrolysis time of 1 second to 20 minutes are appropriate, and the coating film amount is adjusted to obtain a desired coating film amount.

According to the invention, it is preferable that an electrochemical treatment is carried out using nitric acid, hydrochloric acid, sulfuric acid, phosphoric acid, oxalic acid, or a mixed acid of two or more of these acids as the liquid electrolyte.

In a case in which the electrochemical treatment is carried out in a liquid electrolyte including nitric acid or hydrochloric acid, a direct current may be applied, or an alternating current may be applied, between the aluminum base material and a counter electrode. In a case where a direct current is applied to the aluminum base material, the current density is preferably 1 to 60 A/dm², and more preferably 5 to 50 A/dm². In a case in which the electrochemical treatment is carried out continuously, it is preferable that the electrochemical treatment is carried out by a liquid power feeding system that feeds electric power to the aluminum base material through a liquid electrolyte.

According to the invention, the amount of the aluminum hydroxide coating film formed by the coating film forming treatment is preferably 0.05 to 50 g/m², and more preferably 0.1 to 10 g/m².

### [Through-hole forming step]

The through-hole forming step is a step of subjecting the aluminum base material to an electrolytic dissolution treatment after the coating film forming step and forming through-holes.

### <Electrolytic dissolution treatment>

The electrolytic dissolution treatment is not particularly limited, and a direct current or an alternating current is used, while an acidic solution can be used as a liquid electrolyte. Above all, it is preferable that the electrochemical treatment is carried out using at least one acid between nitric acid and hydrochloric acid, and it is more preferable that the electrochemical treatment is carried out using a mixed acid obtained by adding at least one or more acids of sulfuric acid, phosphoric acid, and oxalic acid to these acids.

According to the invention, as the acidic solution that works as a liquid electrolyte, the liquid electrolytes described in US4671859A, US4661219A, US4618405A, US4600482A, US4566960A, US4566958A, US4566959A, US4416972A, US4374710A, US4336113A, and US4184932A can also be used, in addition to the acids described above.

The concentration of the acidic solution is preferably 0.1% to 2.5% by mass, and particularly preferably 0.2% to 2.0% by mass. The liquid temperature of the acidic solution is preferably 20°C to 80°C, and more preferably 30°C to 60°C.

An aqueous solution containing the above-described acid as a main ingredient can be used after being produced by adding, to an aqueous solution of acid at a concentration of 1 to 100 g/L, at least one of a nitric acid compound having a nitrate ion, such as aluminum nitrate, sodium nitrate, or ammonium nitrate; a hydrochloric acid compound having a hydrochloride ion, such as aluminum chloride, sodium chloride, or ammonium chloride; and a sulfuric acid compound having a sulfate ion, such as aluminum sulfate, sodium sulfate, or ammonium sulfate in an amount in the range of from 1 g/L to saturation.

Here, the phrase "containing as a main ingredient" means that the component that serves as a main ingredient in the aqueous solution is included in an amount of 30% by mass or more, and preferably 50% by mass or more, with respect to the total amount of the components added to the aqueous solution. In the following description, the same also applies to other components.

In the aqueous solution containing the above-described acid as a main ingredient, the metal that is included in an aluminum alloy, such as iron, copper, manganese, nickel, titanium, magnesium, or silica may be dissolved. Preferably, it is preferable to use a liquid obtained by adding aluminum chloride, aluminum nitrate, aluminum sulfate, or the like such that the content of an aluminum ion in an aqueous solution having an acid concentration of 0.1% to 2% by mass will be 1 to 100 g/L.

In the electrochemical dissolution treatment, a direct current is mainly used; however, in the case of using an alternating current, the alternating current power waveform is not particularly limited, and a sine wave, a rectangular wave, a trapezoidal wave, a triangular wave, and the like are used. Above all, a rectangular wave or a trapezoidal wave is preferred, and a trapezoidal wave is particularly preferred.

### (Nitric acid electrolysis)

According to the invention, through-holes having an average opening diameter of 0.1 µm or more and less than 100 µm can be easily formed by an electrochemical dissolution treatment using a liquid electrolyte containing nitric acid as a main ingredient (hereinafter, also simply referred to as "nitric acid dissolution treatment").

Here, it is preferable that the nitric acid dissolution treatment is an electrolysis treatment carried out using a direct current under the conditions of an average current density of 5 A/dm² or more and an amount of electricity of 50 C/dm² or more, for the reason that it is easy to control the dissolution point for through-hole formation. The average current density is preferably 100 A/dm² or less, and the amount of electricity is preferably 10,000 C/dm² or less.

The concentration or temperature of the liquid electrolyte for the nitric acid electrolysis is not particularly limited, and electrolysis can be carried out using a nitric acid liquid electrolyte having a high concentration, for example, a nitric acid concentration of 15% to 35% by mass, at 30°C to 60°C, or electrolysis can be carried out using a nitric acid liquid electrolyte having a nitric acid concentration of 0.7% to 2% by mass at a high temperature, for example, at or above 80°C.

Furthermore, electrolysis can be carried out using a liquid electrolyte prepared by mixing the nitric acid liquid electrolyte described above with at least one of sulfuric acid, oxalic acid, and phosphoric acid, all of the acids having a concentration of 0.1% to 50% by mass.

### (Hydrochloric acid electrolysis)

According to the invention, through-holes having an average opening diameter of 1 µm or more and less than 100 µm can be easily formed by an electrochemical dissolution treatment (hereinafter, also simply referred to as "hydrochloric acid dissolution treatment") using a liquid electrolyte containing hydrochloric acid as a main ingredient.

Here, it is preferable that the hydrochloric acid dissolution treatment is an electrolysis treatment carried out using a direct current under the conditions of an average current density of 5 A/dm² or more and an amount of electricity of 50 C/dm² or more, for the reason that it is easy to control the dissolution point for through-hole formation. The average current density is preferably 100 A/dm² or less, and the amount of electricity is preferably 10,000 C/dm² or less.

The concentration or temperature of the liquid electrolyte for the hydrochloric acid electrolysis is not particularly limited, and electrolysis can be carried out using a hydrochloric acid liquid electrolyte having a high concentration, for example, a hydrochloric acid concentration of 10% to 35% by mass, at 30°C to 60°C, or electrolysis can be carried out using a hydrochloric acid liquid electrolyte having a hydrochloric acid concentration of 0.7% to 2% by mass at a high temperature, for example, at or above 80°C.

Furthermore, electrolysis can be carried out using a liquid electrolyte prepared by mixing the hydrochloric acid liquid electrolyte described above with at least one of sulfuric acid, oxalic acid, and phosphoric acid, all of the acids having a concentration of 0.1% to 50% by mass.

### [Coating film removing step]

The coating film removing step is a step of removing the aluminum hydroxide coating film by performing a chemical dissolution treatment.

In the coating film removing step, for example, the aluminum hydroxide coating film can be removed by applying an acid etching treatment or an alkali etching treatment, which will be described below.

### <Acid etching treatment>

The dissolution treatment is a treatment of dissolving the aluminum hydroxide coating film using a solution that dissolves aluminum hydroxide preferentially to aluminum (hereinafter, referred to as "aluminum hydroxide dissolving liquid").

Here, the aluminum hydroxide dissolving liquid is preferably an aqueous solution containing at least one selected from the group consisting of, for example, nitric acid, hydrochloric acid, sulfuric acid, phosphoric acid, oxalic acid, a chromium compound, a zirconium-based compound, a titanium-based compound, a lithium salt, a cerium salt, a magnesium salt, sodium silicofluoride, zinc fluoride, a manganese compound, a molybdenum compound, a magnesium compound, a barium compound, and simple halogens.

Specifically, examples of the chromium compound include chromium(III) oxide and anhydrous chromic(VI) acid.

Examples of the zirconium-based compound include ammonium zirconium fluoride, zirconium fluoride, and zirconium chloride.

Examples of the titanium compound include titanium oxide and titanium sulfide.

Examples of the lithium salt include lithium fluoride and lithium chloride.

Examples of the cerium salt include cerium fluoride and cerium chloride.

Examples of the magnesium salt include magnesium sulfide.

Examples of the manganese compound include sodium permanganate and calcium permanganate.

Examples of the molybdenum compound include sodium molybdate.

Examples of the magnesium compound include magnesium fluoride pentahydrate.

Examples of the barium compound include barium oxide, barium acetate, barium carbonate, barium chlorate, barium chloride, barium fluoride, barium iodide, barium lactate, barium oxalate, barium perchlorate, barium selenate, barium selenite, barium stearate, barium sulfite, barium titanate, barium hydroxide, barium nitrate, and hydrates thereof.

Among the barium compounds mentioned above, barium oxide, barium acetate, and barium carbonate are preferred, and barium oxide is particularly preferred.

Examples of the simple halogens include chlorine, fluorine, and bromine.

Among them, it is preferable that the aluminum hydroxide dissolving liquid is an aqueous solution containing an acid, and examples of the acid include nitric acid, hydrochloric acid, sulfuric acid, phosphoric acid, and oxalic acid, while the acid may be a mixture of two or more kinds of acids. Among them, it is preferable to use nitric acid as the acid.

The acid concentration is preferably 0.01 mol/L or higher, more preferably 0.05 mol/L or higher, and even more preferably 0.1 mol/L or higher. The upper limit is not particularly limited; however, generally, the upper limit is preferably 10 mol/L or lower, and more preferably 5 mol/L or lower.

The dissolution treatment is carried out by bringing the aluminum base material having an aluminum hydroxide coating film formed thereon, into contact with the dissolving liquid mentioned above. There are no particular limitations on the method of contacting, and for example, a dipping method and a spraying method may be used. Among them, a dipping method is preferred.

A dipping method is a treatment of dipping the aluminum base material having an aluminum hydroxide coating film formed thereon, in the dissolving liquid described above. It is preferable that stirring is performed at the time of dipping in order to achieve a treatment without unevenness.

The time for the dipping treatment is preferably 10 minutes or longer, more preferably 1 hour or longer, and even more preferably 3 hours or longer, or 5 hours or longer.

### <Alkali etching treatment>

The alkali etching treatment is a treatment of dissolving the surface layer by bringing the aluminum hydroxide coating film into contact with an alkali solution.

Examples of the alkali used in the alkali solution include caustic alkali and alkali metal salts. Specific examples of the caustic alkali include sodium hydroxide (caustic soda) and caustic potash. Examples of the alkali metal salt include alkali metal silicates such as sodium metasilicate, sodium silicate, potassium metasilicate, and potassium silicate; alkali metal carbonates such as sodium carbonate and potassium carbonate; alkali metal aluminates such as sodium aluminate and potassium aluminate; alkali metal aldonates such as sodium gluconate and potassium gluconate; and alkali metal hydrogen phosphates such as disodium phosphate, dipotassium phosphate, trisodium phosphate, and tripotassium phosphate. Among them, from the viewpoint of having a fast etching rate and being inexpensive, a solution of a caustic alkali and a solution containing both a caustic alkali and an alkali metal aluminate are preferred. Particularly, an aqueous solution of sodium hydroxide is preferred.

The concentration of the alkali solution is preferably 0.1% to 50% by mass, and more preferably 0.2% to 10% by mass. In a case in which aluminum ions are dissolved in an alkali solution, the concentration of aluminum ions is preferably 0.01% to 10% by mass, and more preferably 0.1% to 3% by mass. The temperature of the alkali solution is preferably 10°C to 90°C. The treatment time is preferably 1 to 120 seconds.

Examples of the method of bringing the aluminum hydroxide coating film into contact with an alkali solution include a method of passing the aluminum base material having an aluminum hydroxide coating film formed thereon through a tank containing an alkali solution; a method of dipping the aluminum base material having an aluminum hydroxide coating film formed thereon into a tank containing an alkali solution; and a method of spraying an alkali solution over the surface (aluminum hydroxide coating film) of the aluminum base material having an aluminum hydroxide coating film formed thereon.

### [Resin layer forming step]

The resin layer forming step is a step of forming a resin layer on the surface of the aluminum base material having through-holes after the coating film removing step in regard to production method A, and is a step of forming a resin layer on the aluminum base material that does not have through-holes in regard to production method B.

The method of forming a resin layer is not particularly limited; however, examples include dry lamination, wet lamination, extrusion lamination, and inflation lamination.

Among these, as described above, since an aspect in which the average thickness of the resin layer is 12 to 200 µm (particularly, 25 to 100 µm) and an aspect in which the average thickness of the aluminum base material is 5 to 1,000 µm are suitable aspects, a method of forming a resin layer by dry lamination is preferred.

Regarding the dry lamination, for example, the conditions and apparatuses described in paragraphs [0067] to [0078] of JP2013-121673A can be employed as appropriate.

### EXAMPLES

The invention will be described in more detail below based on Examples. The materials, use amounts, proportions, treatment contents, treatment procedures, and the like disclosed in the following Examples can be modified as appropriate as long as the purport of the invention is maintained. Therefore, the scope of the invention should not be construed to be limited by the following Examples.

### [Example 1]

### <Production of aluminum base material>

An aluminum base material (JIS H-4160, alloy number: 1085-H, aluminum purity: 99.85%) having an average thickness of 20 µm and a size of 200 mm × 300 mm was subjected to the treatments described below on the surface, and thus an aluminum base material having through-holes was produced.

### (a1) Aluminum hydroxide coating film forming treatment (coating film forming step)

The aluminum base material described above was subjected to an electrolysis treatment by using the aluminum base material as a negative electrode, using a liquid electrolyte (nitric acid concentration 1%, sulfuric acid concentration 0.2%, and aluminum concentration 0.5%) that had been kept warm at 50°C, and thus an aluminum hydroxide coating film was formed on the aluminum base material. The electrolysis treatment was achieved using a direct current power supply. The direct current density was set to 33 A/dm², and the current was applied for 30 seconds.

After the formation of the aluminum hydroxide coating film, spray washing with water was carried out.

The thickness of the aluminum hydroxide coating film was measured by making an observation by SEM of a cross section cut by focused ion beam (FIB) cutting processing, and the thickness was 1.5 µm.

### (b1) Electrolytic dissolution treatment (through-hole forming step)

Next, the aluminum base material was subjected to an electrolysis treatment by using the aluminum base material as a positive electrode, using a liquid electrolyte (nitric acid concentration 1%, sulfuric acid concentration 0.2%, and aluminum concentration 0.5%) that had been kept warm at 50°C, by setting the current density to 25 A/dm² under the conditions of a sum of the amounts of electricity of 700 C/dm². Thus, through-holes were formed in the aluminum base material and the aluminum hydroxide coating film. The electrolysis treatment was carried out using a direct current power supply.

After the formation of through-holes, spray washing with water was carried out, and the aluminum base material was dried.

### (c1) Aluminum hydroxide coating film removing treatment (coating film removing step)

Next, the aluminum base material obtained after the electrolytic dissolution treatment was immersed in an aqueous solution having a sodium hydroxide concentration of 5% by mass and an aluminum ion concentration of 0.5% by mass (liquid temperature 35°C) for 30 seconds, and then the aluminum base material was immersed in an aqueous solution having a sulfuric acid concentration of 30% and an aluminum ion concentration of 0.5% by mass (liquid temperature 50°C) for 20 seconds. Thus, the aluminum hydroxide coating film was dissolved and removed.

Subsequently, spray washing with water was carried out, and the aluminum base material was dried. Thus, an aluminum base material having through-holes was produced.

### <Production of composite body (formation of resin layer)>

A PET film having a thickness of 100 µm was used as a resin layer, and the resin layer was laminated on the aluminum base material produced as described above, by the method described in JP2013-121673A. Thus, a composite body was produced. The thickness of the resin layer after production was 100 µm.

### [Example 2]

A composite body was produced by a method similar to that of Example 1, except that the sum of the amounts of electricity for the electrolytic dissolution treatment (b1) of Example 1 was changed to 850 C/dm².

### [Example 3]

A composite body was produced by a method similar to that of Example 1, except that the sum of the amounts of electricity for the electrolytic dissolution treatment (b1) of Example 1 was changed to 1,400 C/dm².

### [Example 4]

A composite body was produced by a method similar to that of Example 1, except that the sum of the amounts of electricity for the electrolytic dissolution treatment (b1) of Example 1 was changed to 1,800 C/dm².

### [Comparative Example 1]

An aluminum base material was produced according to the method described in WO2008/078777A.

Specifically, an aluminum foil (thickness: 20 µm) in which the crystal orientation had been aligned was produced into an aluminum base material having through-holes having an average opening diameter of 3 µm, by adjusting the temperature of the hydrochloric acid liquid electrolyte and the amount of electricity of the electrolysis treatment.

A resin layer was formed by a method similar to that of Example 1, except that the aluminum base material thus produced was used, and thus a composite body was produced.

### [Comparative Example 2]

An aluminum base material was produced according to the method described in WO2008/078777A.

Specifically, a pattern was formed by resist printing on the surface of a hard aluminum foil (thickness: 20 µm), and the aluminum foil was subjected to a chemical etching treatment with an alkali treatment liquid. Thus, an aluminum base material having through-holes having an average opening diameter of 110 µm was produced.

A resin layer was formed by a method similar to that of Example 1, except that the aluminum base material thus produced was used, and a composite body was produced.

### [Comparative Example 3]

An aluminum base material was produced according to the method described in WO2008/078777A.

Specifically, through-holes (average opening diameter: 300 µm) were mechanically formed in a hard aluminum foil (thickness: 20 µm) using a punching die, and thus an aluminum base material was produced.

A resin layer was formed by a method similar to that of Example 1, except that the aluminum base material thus produced was used, and a composite body was produced.

### [Example 5]

An aluminum base material was produced by a method similar to that of Comparative Example 1, and then the aluminum base material was immersed in an aqueous solution (liquid temperature 35°C) having a sodium hydroxide concentration of 5% by mass and an aluminum ion concentration of 0.5% by mass for 120 seconds and then was immersed in an aqueous solution (liquid temperature 50°C) having a sulfuric acid concentration of 30% and an aluminum ion concentration of 0.5% by mass for 20 seconds. Thus, an aluminum base material having through-holes having an average opening diameter of 15 µm was produced.

A resin layer was formed by a method similar to that of Example 1, except that the aluminum base material thus produced was used, and a composite body was produced.

### [Example 6]

On one of the surfaces of an aluminum base material (JIS H-4160, alloy number: 1085-H, aluminum purity: 99.85%) having an average thickness of 9.0 µm and a size of 200 mm × 300 mm, a PET film having a thickness of 125 µm was laminated as a resin layer by the method described in JP2013-121673A. Subsequently, the laminate was subjected to the treatments described below, and thus a composite body was produced.

### (a2) Aluminum hydroxide coating film forming treatment (coating film forming step)

The aluminum base material was subjected to an electrolysis treatment by using the aluminum base material as a negative electrode, using a liquid electrolyte (nitric acid concentration 1%, sulfuric acid concentration 0.2%, and aluminum concentration 0.5%) that had been kept warm at 50°C, and thus an aluminum hydroxide coating film was formed on the surface of the aluminum base material on the side where the PET film was not provided. The electrolysis treatment was carried out using a direct current power supply. The direct current density was set to 55 A/dm², and a direct current was applied for 30 seconds.

After the formation of the aluminum hydroxide coating film, spray washing with water was carried out.

The thickness of the aluminum hydroxide coating film was measured by making an observation by SEM of a cross section cut by focused ion beam (FIB) cutting processing, and the thickness was 1.5 µm.

### (b2) Electrolytic dissolution treatment (through-hole forming step)

Next, the aluminum base material was subjected to an electrolysis treatment by using the aluminum base material as a positive electrode, using a liquid electrolyte (nitric acid concentration 1%, sulfuric acid concentration 0.2%, and aluminum concentration 0.5%) that had been kept warm at 50°C, by setting the current density to 35 A/dm² under the conditions of a sum of the amounts of electricity of 400 C/dm². Thus, through-holes were formed in the aluminum base material and the aluminum hydroxide coating film. The electrolysis treatment was carried out using a direct current power supply.

After the formation of through-holes, spray washing with water was carried out, and the aluminum base material was dried.

### (c2) Aluminum hydroxide coating film removing treatment (coating film removing step)

Next, the aluminum base material obtained after the electrolytic dissolution treatment was immersed in an aqueous solution having a sodium hydroxide concentration of 35% by mass and an aluminum ion concentration of 0.5% by mass (liquid temperature 35°C) for 25 seconds, and then the aluminum base material was immersed in an aqueous solution having a sulfuric acid concentration of 30% and an aluminum ion concentration of 0.5% by mass (liquid temperature 50°C) for 20 seconds. Thus, the aluminum hydroxide coating film was dissolved and removed.

Subsequently, spray washing with water was carried out, and the aluminum base material was dried. Thus, a composite body having a PET film provided on an aluminum base material having through-holes was produced.

For the thickness of the aluminum base material; the average opening ratio provided by the through-holes, the average opening diameter, and the average effective diameter; and the thickness of the resin layer in the various composite bodies produced in Examples 1 to 6 and Comparative Examples 1 to 3, the values measured by the methods described above are presented in the following Table 2.

### [Evaluation]

### <External appearance>

The composite body thus produced was installed, and a PET sheet in which characters having a diameter of 2 cm were described was installed at a place 1 cm away from the lower part on the resin layer side of the composite body.

Next, in a bright environment with an illuminance at an illumination level of 1,000 Lux, a test was conducted to see whether an observer can recognize the characters written on the PET sheet from a position 50 cm away from the composite body at an inclination angle of 45°. The above test was carried out with ten people, and an evaluation was made according to the following criteria. For practical use, a grade of 1 or 2 is preferred.
1: The number of people who can recognize the characters is zero.
2: The number of people who can recognize the characters is 1 to 2.
3: The number of people who can recognize the characters is 3 to 5.
4: The number of people who can recognize the characters is 5 to 10.

### <Light-transmitting properties>

In an environment similar to that for the test on external appearance as described above, a light emitting diode (LED) light (SG-355B; manufactured by GENTOS Co., Ltd.) was disposed at a place 4 cm away from the lower part of the PET sheet, the light was turned on, and a test was conducted to see whether an observer can recognize the characters written on the PET sheet. The above test was carried out with ten people, and an evaluation was made according to the following criteria. For practical use, a grade of 1 to 3 is preferred, and a grade of 1 or 2 is more preferred.
1: The number of people who can recognize the characters is 9 to 10.
2: The number of people who can recognize the characters is 6 to 8.
3: The number of people who can recognize the characters is 2 to 5.
4: The number of people who can recognize the characters is 0 to 1.

**[Table 2]**

| | Aluminum base material | | | | Resin layer | Evaluation | | |
|---|---|---|---|---|---|---|---|---|
| | Through-holes | | | Thickness (µm) | Thickness (µm) | | | |
| | Average opening ratio (%) | Average opening diameter (µm) | Average effective diameter (µm) | | | External appearance | Light-transmitting properties | Overall |
| Example 1 | 5 | 15 | 15 | 18.5 | 100 | 1 | 2 | A |
| Example 2 | 10 | 30 | 20 | 18.5 | 100 | 1 | 1 | A |
| Example 3 | 20 | 60 | 35 | 18.5 | 100 | 1 | 1 | A |
| Example 4 | 30 | 91 | 80 | 18.5 | 100 | 2 | 1 | A |
| Example 5 | 18 | 15 | 0.67 | 15.5 | 100 | 1 | 3 | B |
| Example 6 | 41 | 30 | 27 | 7.0 | 125 | 1 | 1 | A |
| Comparative Example 1 | 0.7 | 3 | 0 | 20.0 | 100 | 1 | 4 | C |
| Comparative Example 2 | 30 | 110 | 110 | 20.0 | 100 | 3 | 1 | C |
| Comparative Example 3 | 17 | 300 | 300 | 20.0 | 100 | 4 | 1 | C |

As shown in the above Table 2, it was found that a composite body in which the average opening ratio provided by the through-holes was smaller than 1%, had satisfactory external appearance but had poor light-transmitting properties, and thus the overall evaluation was poor (Comparative Example 1).

It was also found that a composite body in which the average opening diameter of the through-holes was larger than 100 µm, had satisfactory light-transmitting properties but had poor external appearance, and thus the overall evaluation was poor (Comparative Examples 2 and 3).

In contrast, it was found that a composite body in which the average opening diameter of the through-holes was 0.1 to 100 µm and the average opening ratio provided by the through-holes was 1% to 50%, had both satisfactory external appearance and satisfactory light-transmitting properties, and thus the overall evaluation was good (Examples 1 to 6).

From a comparison between Examples 1 to 4 and Example 5, it was found that in a case where the average effective diameter is 700 nm (0.7 µm) or more, the light-transmitting properties become more satisfactory, and the overall evaluation was A.

The composite body of the invention can also be used in applications of molded articles such as metal tone decorated bodies used for illumination applications, as well as in photocatalyst supports, hydrogen-generating catalyst carriers, enzyme electrodes, carriers for noble metal absorbent materials, antibacterial carriers, adsorbents, absorbents, optical filters, far-infrared cutoff filters, sound-proof and sound-absorbing materials, electromagnetic wave shields, construction materials, and the like.

### Explanation of References

1: aluminum base material
2: aluminum hydroxide coating film
3: aluminum base material having through-holes
A, B: reference line
3a, 3b: starting point
a, b: perpendicular line
4: aluminum hydroxide coating film having through-holes
5: through-holes
6: resin layer
10: composite body

## Claims

1. A composite body comprising:
an aluminum base material having a plurality of through-holes in the thickness direction; and
a resin layer provided on at least one surface of the aluminum base material,
wherein the average opening diameter of the through-holes is 0.1 to 100 µm, and
the average opening ratio provided by the through-holes is 1% to 50%.

2. The composite body according to claim 1, wherein the average effective diameter of the through-holes in a cross section cut in a direction perpendicular to the surface of the aluminum base material is 700 nm or larger.

3. The composite body according to claim 1 or 2, wherein the average thickness of the resin layer is 12 to 200 µm.

4. The composite body according to any one of claims 1 to 3, wherein the average thickness of the aluminum base material is 5 to 1,000 µm.

## Amended claims

### Amended claims under Art. 19.1 PCT

1. A composite body for molding metal tone decorated body comprising:
an aluminum base material having a plurality of through-holes in the thickness direction; and
a resin layer provided on at least one surface of the aluminum base material,
wherein the average opening diameter of the through-holes is 0.1 to 100 µm, and
the average opening ratio provided by the through-holes is 1% to 50%.

2. The composite body for molding metal tone decorated body according to claim 1, wherein the average effective diameter of the through-holes in a cross section cut in a direction perpendicular to the surface of the aluminum base material is 700 nm or larger.

3. The composite body for molding metal tone decorated body according to claim 1 or 2, wherein the average thickness of the resin layer is 12 to 200 µm.

4. The composite body for molding metal tone decorated body according to any one of claims 1 to 3, wherein the average thickness of the aluminum base material is 5 to 1,000 µm.

Statement under Art. 19.1 PCT
The amended set of claims corresponds to the amended claims filed on June 27, 2017 under PCT Article 19(1). In the marked-up version of the amended claims that is herewith filed together with a clean copy thereof, the amendments are underlined.

It can thus be seen that the composite body has been further characterized throughout the claims as being *"for molding metal tone decorated body".* This is supported by the last sentence of paragraph [0016] and the first sentence of paragraph [0070] of the description.

Therefore, the requirements of Article 123(2) EPC have been met when amending.
